# EUROPEAN PATENT APPLICATION

(11) **EP 4 207 654 A1**
(43) Date of publication of application: **05.07.2023**
(21) Application number: 20953649.9
(22) Date of filing: 17.09.2020
(51) Int. Cl.: H04L 1/18

(54) **PACKET RETRANSMISSION METHOD AND APPARATUS**

(71) Applicant: Huawei Technologies Co., Ltd., Shenzhen, Guangdong 518129 (CN)
(72) Inventor: QU, Xiangfeng, Shenzhen, Guangdong 518129 (CN)
(74) Representative: Gill Jennings & Every LLP
(86) International application number: PCT/CN2020/115985
(87) International publication number: WO 2022/056791

(57) **Abstract**

Embodiments of this application relate to the field of chip technologies, and disclose a packet retransmission method and an apparatus, to resolve a problem of a long retransmission delay caused by untimely packet retransmission. The method includes: A transmit end receives a first selective acknowledgment SACK packet from a receive end, where the first SACK packet indicates that at least one of packets sent by the transmit end to the receive end fails to be sent; the transmit end retransmits the at least one packet to the receive end, and when retransmitting the last packet in the at least one packet, records a packet sequence number of the first new packet to be sent by the transmit end; and the transmit end retransmits a first packet to the receive end again when the transmit end receives a second SACK packet and a packet sequence number of a packet carried in the second SACK packet is greater than or equal to the packet sequence number of the first new packet, and if the transmit end still has not received an ACK packet corresponding to the first packet in the at least one packet. Embodiments of this application are used for packet retransmission in RDMA.

## Description

### TECHNICAL FIELD

This application relates to the field of chip technologies, and in particular, to a packet retransmission method and an apparatus.

### BACKGROUND

At present, an Ethernet technology has been dominant in the globally-connected Internet, but it has many disadvantages in a high-bandwidth and low-latency private network. With rise of a concept of network convergence, a lossless link based on remote direct memory access (remote direct memory access, RDMA) is implemented. The Ethernet has its own standard in the private network field. A concept of RDMA over converged Ethernet (RDMA over converged Ethernet, RoCE) is also proposed. A lossless (lossless) network is required for RDMA. For example, for a switch, a case in which buffer overflow results in a packet loss needs to be avoided. Therefore, priority-based flow control (priority-based flow control, PFC) is used for flow control in RoCE. For example, once a receive queue at a port (port) of a switch exceeds a specific threshold (threshold), a PFC pause frame (pause frame) is sent to a receive end to indicate the receive end to stop packet sending.

As a scale of a RoCE network increases, enabling PFC for flow control brings a plurality of disadvantages to a large-scale network. For example, a PFC storm occurs easily to cause PFC deadlock, which results in a packet loss. Therefore, when RoCE is applied to a lossless network, it is quite important to retransmit a packet in a timely manner after the packet is lost. In an existing lost packet retransmission technology, retransmission may be performed according to a go-back-N (Go-Back-N) protocol. After a packet is lost, a packet sequence number (packet sequence number, PSN) error (Error) occurs. This triggers fast retransmission of the lost packet and all subsequent packets in a timeout period. However, retransmission of all the packets after the lost packet results in a waste of a large amount of bandwidth. In addition, if the packet that is fast retransmitted fails to be retransmitted again and is discarded, when the timeout period expires, the lost packet and all the subsequent packets continue to be retransmitted. In other words, when retransmission is to be performed again, the lost packet and the subsequent packets can be retransmitted again only after the timeout period expires. This causes a significant increase in a delay, and consequently retransmission is not performed in a timely manner.

### SUMMARY

Embodiments of this application provide a packet retransmission method and an apparatus, to resolve a problem of a long retransmission delay caused by untimely packet retransmission.

To achieve the foregoing objective, the following technical solutions are used in embodiments of this application.

According to a first aspect, a packet retransmission method is provided, where the method is applied to an RDMA network. The method includes: A transmit end receives a first selective acknowledgment SACK packet from a receive end, where the first SACK packet indicates that at least one of packets sent by the transmit end to the receive end fails to be sent; the transmit end retransmits the at least one packet to the receive end, and when retransmitting the last packet in the at least one packet, records a packet sequence number of the first new packet to be sent by the transmit end; and the transmit end retransmits a first packet to the receive end again when the transmit end receives a second SACK packet and a packet sequence number of a packet carried in the second SACK packet is greater than or equal to the packet sequence number of the first new packet, and if the transmit end still has not received an ACK packet corresponding to the first packet in the at least one packet.

Therefore, in comparison with a case in the conventional technology in which retransmission is performed starting from the first retransmitted packet during packet retransmission to start packet sending, in this application, an SACK packet indicates a specific packet that the transmit end fails to send, so that the transmit end can retransmit only the packet that fails to be sent, thereby shortening a retransmission delay. In addition, in this application, during retransmission of the last packet indicated by the SACK packet, a PSN of a next new packet can be recorded, and a PSN carried in a received SACK can be compared with the recorded PSN, to determine whether there is a packet that fails to be retransmitted, that is, whether there is a "discarded retransmitted packet". If it is determined that there is a packet that fails to be retransmitted, retransmission may be immediately performed again. Usually, duration from a time when the transmit end starts to retransmit a packet for the first time to a time when the transmit end starts to retransmit a packet next time is usually far less than one timeout period. Packet retransmission can be started again if the duration is in one RTT period, in other words, "a discarded retransmitted packet" can be retransmitted if the duration is in one RTT period. One RTT period is far less than one timeout period, so that "the discarded retransmitted packet" can be retransmitted in time, thereby shortening a retransmission delay.

In a possible design, the first SACK packet carries a bitmap, the bitmap includes at least one bit, and some bits of the at least one bit indicate that the at least one of the packets sent by the transmit end to the receive end fails to be sent. When receiving the first SACK packet, the receive end may accurately learn, based on the bitmap, which packets are successfully sent and which packets fail to be sent. During packet retransmission, only a packet that fails to be sent is retransmitted, so that a retransmission delay can be shortened.

In a possible design, before the transmit end retransmits the at least one packet to the receive end, the method further includes: The transmit end suspends sending a new packet to the receive end. After the transmit end retransmits the at least one packet to the receive end, the method further includes: The transmit end continues to send a new packet to the receive end. In the conventional technology, when there is a packet that fails to be sent, retransmission is performed starting from the packet that fails to be sent, to perform packet sending includes: A packet that is successfully sent and that is after the packet that fails to be sent is also retransmitted. By contrast, in this application, only the packet that fails to be sent is retransmitted, and when it is determined that retransmission is to be performed, sending a new packet to the receive end is suspended. After the packet is retransmitted, sending a new packet to the receive end continues to be performed, so that a retransmission delay can be shortened.

In a possible design, that the transmit end retransmits the first packet to the receive end again when the transmit end receives a second SACK packet and a packet sequence number of a packet carried in the second SACK packet is greater than or equal to the packet sequence number of the first new packet, if the transmit end still has not received an ACK packet corresponding to a first packet in the at least one packet includes: When receiving each SACK packet, the transmit end compares a packet sequence number carried in each SACK packet with the recorded packet sequence number of the first new packet, to determine whether the packet sequence number carried in each SACK packet is greater than or equal to the packet sequence number of the first new packet; when the transmit end receives the second SACK packet and the packet sequence number of the packet carried in the second SACK packet is greater than or equal to the packet sequence number of the first new packet, the transmit end determines whether an ACK packet corresponding to the at least one packet is not received; and if the transmit end still has not received an ACK packet corresponding to the first packet in the at least one packet, the transmit end retransmits the first packet to the receive end again. During recording of a packet sequence number of a to-be-sent new packet in a process of retransmitting the last packet, the to-be-sent new packet is sent after the retransmitted packet. Therefore, if the transmit end has received an acknowledgment packet corresponding to the new packet, but still has not received an acknowledgment packet corresponding to the retransmitted packet, it indicates that first-time retransmission of the retransmitted packet fails. In this case, second-time retransmission needs to be performed. There is no need to wait for expiration of the timeout period to start second-time retransmission. The second-time retransmission can be started immediately, thereby shortening a retransmission delay.

In a possible design, a time period from a time when the transmit end starts to retransmit the at least one packet to a time when the transmit end retransmits the first packet again is less than one timeout period. In other words, in this application, a time period in which the first-time retransmission and the second-time retransmission are performed is far less than one timeout period. In this application, when it is determined that the second-time retransmission needs to be performed, the second-time retransmission is immediately performed. Therefore, there is no need to wait for expiration of the timeout period to perform the second-time retransmission. A time period from a time when the first-time retransmission starts to be performed to a time when the second-time packet retransmission is performed may be one RTT period. One RTT period is far less than one timeout period. In this way, packet retransmission is performed in time, thereby shortening a retransmission delay. In other words, the second-time packet retransmission can be performed in one RTT period.

According to a second aspect, a packet retransmission method is provided, where the method is applied to an RDMA network. The method includes: A transmit end receives a first selective acknowledgment SACK packet from a receive end, where the first SACK packet indicates that at least one of packets sent by the transmit end to the receive end fails to be sent; the transmit end retransmits the at least one packet to the receive end, and records, when retransmitting each of the at least one packet, a packet sequence number of the first new packet to be sent by the transmit end after the transmit end retransmits each packet, where the at least one packet includes a second packet, and a packet sequence number that is of the first new to-be-sent packet and that is recorded by the transmit end when the transmit end retransmits the second packet is a packet sequence number of a first new packet; and when the transmit end receives a second SACK packet and a packet sequence number of a packet carried in the second SACK packet is greater than or equal to the recorded packet sequence number of the first new packet, if the transmit end still has not received an ACK packet corresponding to the second packet, the transmit end retransmits the second packet again.

In other words, the transmit end may not only choose to retransmit, to the receive end, only a packet that fails to be sent, but also record a PSN of a next new packet to be sent during retransmission of each packet that fails to be sent. When there is a response to a packet whose recorded PSN is greater than or equal to a PSN of a new packet, but there is no response to a packet that is being retransmitted during the recording, it may be determined that the retransmitted packet fails to be retransmitted and needs to be retransmitted again. When the packet needs to be retransmitted again, the transmit end may immediately retransmit the packet to the receive end again, without waiting for expiration of a timeout period to perform retransmission again. In this way, the packet is retransmitted in time, thereby shortening a delay. In addition, a time period from a time when first-time packet retransmission is performed to a time when packet retransmission is performed again may be one RTT period, and one RTT period is far less than one timeout period. In this case, a plurality of packets that fail to be retransmitted can be accurately retransmitted again in one RTT period, thereby shortening a retransmission delay.

In a possible design, the first SACK packet carries a bitmap, the bitmap includes at least one bit, and some bits of the at least one bit indicate that the at least one of the packets sent by the transmit end to the receive end fails to be sent. To be specific, the first SACK packet may carry the bitmap, the bitmap includes bit values of a plurality of bits, and the bit values of the plurality of bits indicate whether a plurality of packets in a current QC are correctly received.

In a possible design, before the transmit end retransmits the at least one packet to the receive end, the method further includes: The transmit end establishes a linked list for each of a plurality of packet queues, where the linked list is used to record a packet sequence number of the first new packet to be sent by the transmit end after the transmit end retransmits any packet in the retransmitted packet queue. It may also be understood that the linked list is used to establish a correspondence between a retransmitted packet and the first to-be-sent new packet. This is based on the following case: A new packet is sent after a retransmitted packet in a subsequent packet sending process; and if the transmit end has received an acknowledgment packet corresponding to the recorded first to-be-sent new packet, but still has not received an acknowledgment packet corresponding to a corresponding retransmitted packet, it indicates that the retransmitted packet fails to be retransmitted. In this way, the transmit end can learn in time a packet that fails to be sent, and immediately retransmits the packet once the transmit end learns the packet, so that the packet is retransmitted in time.

In a possible design, the recording, when retransmitting each of the at least one packet, a packet sequence number of the first new packet to be sent by the transmit end after the transmit end retransmits each packet includes: When retransmitting the second packet, the transmit end determines a first linked list corresponding to a packet queue in which the second packet is located, and records, in the first linked list, a packet sequence number of the first new packet to be sent by the transmit end after the transmit end retransmits the second packet, where the packet sequence number is the packet sequence number of the first new packet. The first new packet is sent after the retransmitted second packet, and the packet sequence number that is of the first new to-be-sent packet and that is recorded by the transmit end when the transmit end retransmits the second packet is the packet sequence number of the first new packet. Therefore, when the transmit end has received an acknowledgment packet corresponding to the first new packet, but still has not received an acknowledgment packet corresponding to the second packet, it indicates that the retransmitted second packet fails to be retransmitted. In this case, the second packet may be immediately retransmitted to the receive end again, and second-time retransmission does not need to be started when a timeout period expires. In this way, the packet can be retransmitted in time, thereby shortening a retransmission delay.

In a possible design, a time period from a time when the transmit end starts to retransmit the at least one packet to a time when the transmit end retransmits the second packet again is less than one timeout period. In other words, in this application, a time period in which the first-time retransmission and the second-time retransmission are performed is far less than one timeout period. In this application, when it is determined that the second-time retransmission needs to be performed, the second-time retransmission is immediately performed. Therefore, there is no need to wait for expiration of the timeout period to perform the second-time retransmission. A time period from a time when the first-time retransmission starts to be performed to a time when the second-time packet retransmission is performed may be one RTT period. One RTT period is far less than one timeout period. In this way, packet retransmission is performed in time, thereby shortening a retransmission delay. In other words, the second-time packet retransmission can be performed in one RTT period.

According to a third aspect, a communication apparatus is provided, where the communication apparatus serves as a transmit end, and the communication apparatus is applied to a remote direct memory access RDMA network. The communication apparatus includes: a receiver, configured to receive a first selective acknowledgment SACK packet from a receive end, where the first SACK packet indicates that at least one of packets sent by the transmit end to the receive end fails to be sent; a transmitter, configured to retransmit the at least one packet to the receive end; a memory, configured to: when the transmit end retransmits the last packet in the at least one packet, record a packet sequence number of the first new packet to be sent by the transmit end; and a processor, configured to: determine that the transmit end receives a second SACK packet and a packet sequence number of a packet carried in the second SACK packet is greater than or equal to the packet sequence number of the first new packet; and if the transmit end still has not received an ACK packet corresponding to a first packet in the at least one packet, indicate the transmitter to retransmit the first packet to the receive end again.

In a possible design, the first SACK packet carries a bitmap, the bitmap includes at least one bit, and some bits of the at least one bit indicate that the at least one of the packets sent by the transmit end to the receive end fails to be sent.

In a possible design, the processor is configured to: when the transmit end receives each SACK packet, compare a packet sequence number carried in each SACK packet with the recorded packet sequence number of the first new packet, to determine whether the packet sequence number carried in each SACK packet is greater than or equal to the packet sequence number of the first new packet; and when the second SACK packet is received and the packet sequence number of the packet carried in the second SACK packet is greater than or equal to the packet sequence number of the first new packet, determine whether an ACK packet corresponding to the at least one packet is not received; and the transmitter is configured to retransmit the first packet to the receive end again if the transmit end still has not received an ACK packet corresponding to the first packet in the at least one packet.

In a possible design, a time period from a time when the transmit end starts to retransmit the at least one packet to a time when the transmit end retransmits the first packet again is less than one timeout period.

According to a fourth aspect, a communication apparatus is provided, where the communication apparatus serves as a transmit end, and the communication apparatus is applied to a remote direct memory access RDMA network. The communication apparatus includes: a receiver, configured to receive a first selective acknowledgment SACK packet from a receive end, where the first SACK packet indicates that at least one of packets sent by the transmit end to the receive end fails to be sent; a transmitter, configured to retransmit the at least one packet to the receive end; and a memory, configured to: during retransmission of each of the at least one packet, record a packet sequence number of the first new packet to be sent by the transmit end after the transmit end retransmits each packet, where the at least one packet includes a second packet, and a packet sequence number that is of the first new to-be-sent packet and that is recorded by the transmit end when the transmit end retransmits the second packet is a packet sequence number of a first new packet; where the receiver is further configured to: when the receiver receives a second SACK packet and a packet sequence number of a packet carried in the second SACK packet is greater than or equal to the recorded packet sequence number of the first new packet, if the receiver still has not received an ACK packet corresponding to the second packet, indicate the transmitter to retransmit the second packet again.

In a possible design, the first SACK packet carries a bitmap, the bitmap includes at least one bit, and some bits of the at least one bit indicate that the at least one of the packets sent by the transmit end to the receive end fails to be sent.

In a possible design, the apparatus further includes a processor, configured to establish a linked list for each of a plurality of packet queues, where the linked list is stored in the memory, and the linked list is used to record a packet sequence number of the first new packet to be sent by the transmit end after the transmit end retransmits any packet in the retransmitted packet queue.

In a possible design, the memory is configured to: during retransmission of the second packet, determine a first linked list corresponding to a packet queue in which the second packet is located, and record, in the first linked list, a packet sequence number of the first new packet to be sent by the transmit end after the transmit end retransmits the second packet, where the packet sequence number is the packet sequence number of the first new packet.

In a possible design, a time period from a time when the transmit end starts to retransmit the at least one packet to a time when the transmit end retransmits the second packet again is less than one timeout period.

According to a fifth aspect, an embodiment of this application provides a computer-readable storage medium, including computer instructions. When the computer instructions are run on an electronic device, the electronic device is enabled to perform the packet retransmission method in any one of the first aspect, the second aspect, and the possible implementations of the first aspect and the second aspect.

According to a sixth aspect, an embodiment of this application provides a computer program product. When the computer program product runs on a computer, an electronic device is enabled to perform the packet retransmission method in any one of the first aspect, the second aspect, and the possible implementations of the first aspect and the second aspect.

According to a seventh aspect, an embodiment of this application provides a system. The system may include the transmit end and the receive end in any possible implementation of any one of the foregoing aspects. The transmit end and the receive end may perform the packet retransmission method in any one of the foregoing aspects and the possible implementations.

### BRIEF DESCRIPTION OF DRAWINGS

FIG. 1 is a schematic diagram of signal exchanging in packet retransmission;
FIG. 2 is another schematic diagram of signal exchanging in packet retransmission;
FIG. 3 is a schematic diagram of a network architecture according to an embodiment of this application;
FIG. 4 is a schematic diagram of structures of a transmit end and a receive end according to an embodiment of this application;
FIG. 5 is a schematic diagram of a bitmap corresponding to a QP according to an embodiment of this application;
FIG. 6 is a schematic flowchart of packet retransmission according to an embodiment of this application;
FIG. 7 is a schematic diagram of signal exchanging in packet retransmission according to an embodiment of this application;
FIG. 8 is a schematic flowchart of packet retransmission according to an embodiment of this application;
FIG. 9 is another schematic diagram of signal exchanging in packet retransmission according to an embodiment of this application;
FIG. 10 is a schematic diagram of a structure of a communication apparatus according to an embodiment of this application; and
FIG. 11 is a schematic diagram of a structure of a server according to an embodiment of this application.

### DESCRIPTION OF EMBODIMENTS

For ease of understanding, some concepts related to embodiments of this application are described for reference by using examples. Details are as follows:

RDMA: A direct memory access technology. RDMA allows data to be directly transmitted from a memory of one computer to another computer without intervention of operating systems of the two computers. RDMA is proposed to reduce a data processing delay on a server side during network transmission.

RoCE: A network protocol that allows RDMA to be performed over an Ethernet. A lower network header of RoCE is an Ethernet header, and a higher network header (including data) of RoCE is an InfiniBand header (which supports a next-generation network protocol of RDMA). This allows RDMA to be performed over a standard Ethernet infrastructure (switch). RDMA is a new network technology. Therefore, a network interface card and a switch that support the technology are required.

Round trip time (round trip time, RTT): The RTT is an important performance indicator in a computer network. It indicates a total delay caused from a time when a transmit end sends data to a time when the transmit end receives an acknowledgment from a receive end (the receive end immediately sends the acknowledgment after receiving the data).

Queue pair (queue pair, QP): A virtual interface between hardware and software. The QP is a queue structure and sequentially stores tasks delivered by software to hardware. The tasks include information such as a specific location from which data of a specific length is obtained and a specific destination to which the data is sent. Each QP is independent of the other QPs. Therefore, a QP may be regarded as a resource exclusively occupied by a user. One user may also use a plurality of QPs at a same time.

Queue pair context (queue pair context, QPC): It is used to store a QP-related attribute. An entity of the QP in the hardware is only a segment of storage space. The software applies for a piece of continuous space in advance by using an operating system. The QPC may be used to carry QP-related information. The hardware may learn the QP-related attribute by using the QPC. For a network interface card and its matching driver, specific pieces of content in a QPC, specific sizes of space respectively occupied by the pieces of content, and a specific content storage sequence are agreed in advance. In this way, the driver and the hardware can read and write information such as a QP status by using this segment of space of the QPC.

Bitmap (bitmap): It uses at least one bit (bit) to mark a value (value) corresponding to at least one element.

Acknowledgment (acknowledge, ACK) packet: A type of transmission control character sent by a receive end to a transmit end in data communication, indicating that it is confirmed that data that is sent is correctly received.

Selective acknowledgment character (selective acknowledge, SACK): It is used by a receive end to inform a transmit end of information, for example, which packet segments are lost, which packet segments are retransmitted, and which packet segments have been received in advance.

Pack sequence number (pack sequence number, PSN): A sequence number of a data packet or a packet.

The following describes the technical solutions in embodiments of this application with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of the embodiments, unless otherwise specified, "a plurality of" means two or more.

Embodiments of this application are applied to a scenario in which packet retransmission is performed in RoCE.

Currently, in a packet retransmission manner in RoCE, when at least one packet fails to be sent, packet resending is performed starting from the first packet that is in the at least one packet and that fails to be sent. In other words, a transmit end sends all packets after the first retransmitted packet (starting from a start moment of a timeout period). In other words, even if only one packet fails to be sent, all packets after the packet are also retransmitted. This results in a waste of a large amount of bandwidth. In addition, if a case in which a packet fails to be sent occurs again during packet retransmission, packet retransmission needs to be performed again after the timeout period expires and starting from the first packet that fails to be retransmitted during retransmission. In this case, retransmission is not timely enough, a delay is significantly increased, and bandwidth is reduced.

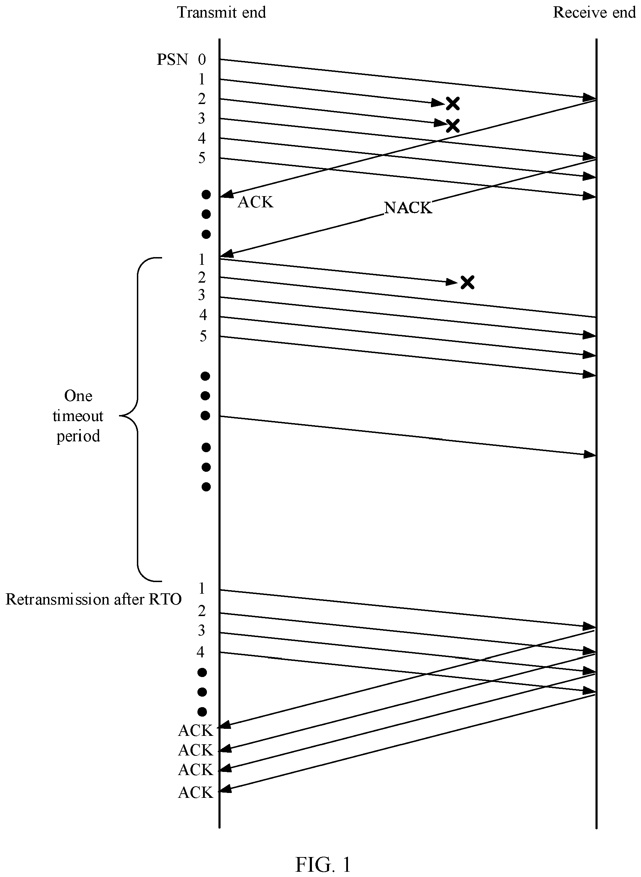

As shown in FIG. 1, a transmit end sends, to a receive end, a plurality of packets whose PSNs are 0, 1, 2, 3, 4, 5, and so on. After feeding back an ACK packet corresponding to the packet whose PSN is 0 to the transmit end, the receive end directly feeds back a negative acknowledgment (negative acknowledgment, NACK) packet corresponding to the packet whose PSN is 1 to the transmit end, in other words, a PSN carried in the NACK packet is 1, indicating that the packet whose PSN is 1 fails to be received. Therefore, the transmit end may determine that the packet whose PSN is 1 fails to be sent. Therefore, when the transmit end receives the NACK packet, a timeout period is started. Starting from a start moment of the timeout period, retransmission of the packet whose PSN is 1 and packets after the packet whose PSN is 1 (the packet whose PSN is 1 to the last packet received before the timeout period is started) is performed starting from the packet whose PSN is 1. In a process in which the transmit end retransmits a packet to the receive end in the timeout period, if there is still a packet that fails to be sent, for example, the packet whose PSN is 1 in FIG. 1 fails to be retransmitted in the timeout period, all packets sent by the transmit end in the timeout period are discarded. After the timeout period expires, the transmit end starts to perform retransmission again starting from the packet whose PSN is 1. This case may be referred to as retransmission after retransmit timeout (retransmit timeout, RTO). In this case, retransmission is not performed timely enough, a delay is significantly increased, and bandwidth is reduced. In FIG. 1, when performing retransmission again starting from the packet whose PSN is 1 after the timeout period expires, the transmit end receives ACKs of a plurality of packets whose PSNs are 1, 2, 3, 4, and the like, indicating that the packets retransmitted again are all successfully retransmitted.

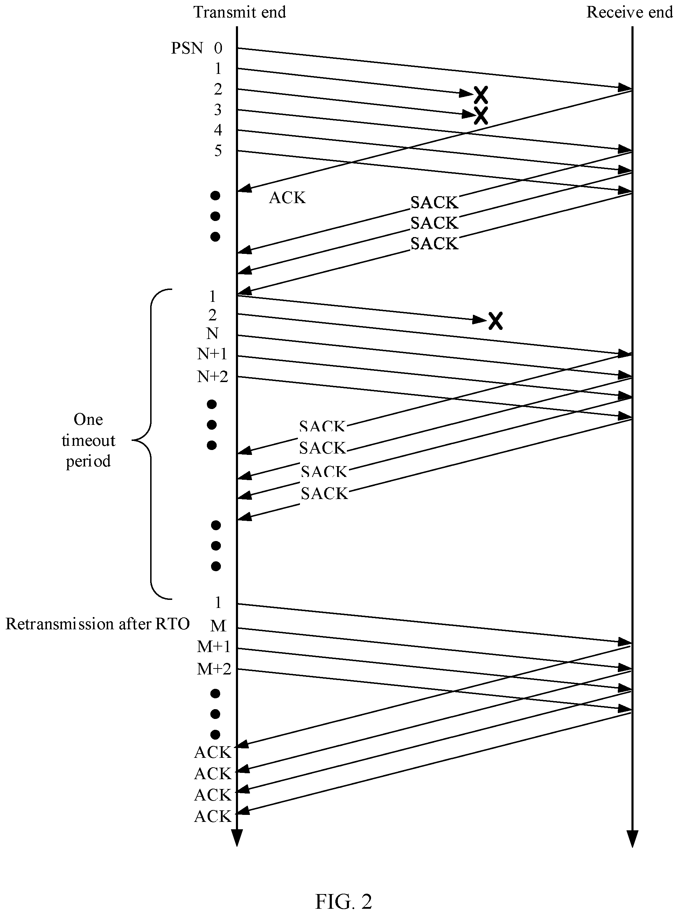

In another packet retransmission manner, the transmit end may selectively retransmit a packet to the receive end. As shown in FIG. 2, a transmit end sends, to a receive end, a plurality of packets whose PSNs are 0, 1, 2, 3, 4, 5, and so on. Similar to the solution in FIG. 1, the transmit end receives an SACK packet carrying a PSN being 3. The SACK packet indicates that the packet whose PSN is 3 is successfully sent, but the packets whose PSNs are 1 and 2 fail to be sent. Therefore, a terminal device needs to retransmit the packets whose PSNs are 1 and 2. However, different from the solution in FIG. 1, the transmit end may retransmit, in a started timeout period, only a packet that fails to be sent. To be specific, after retransmitting the packets whose PSNs are 1 and 2 in the timeout period, the transmit end continues to send new packets to the receive end. For example, the new packets are a plurality of packets whose PSNs in FIG. 2 are N, N+1, and N+2. However, in the solution in FIG. 2, there is also the following case similar to that in the solution in FIG. 1: If the transmit end still fails to retransmit a packet in the timeout period, for example, fails to retransmit the packet whose PSN is 1 in the timeout period, the transmit end receives an SACK packet carrying a PSN being 2. The SACK packet indicates that the packet whose PSN is 2 is successfully retransmitted, but the packet whose PSN is 1 fails to be retransmitted. In this case, the transmit end still needs to wait for expiration of the timeout period to continue to retransmit the packet whose PSN is 1 again. It can be learned that, in FIG. 2, the transmit end starts to continue to send new packets to the receive end only after retransmitting the packet whose PSN is 1 again after the RTO. For example, the new packets are packets whose PSNs are M, M+1, and M+2 in FIG. 2, and are all successfully retransmitted when retransmission is performed again. In other words, the transmit end receives ACK packets that are from the receive end and that are corresponding to the packets whose PSNs are 1, M, M+1, and M+2. Therefore, in this retransmission manner in FIG. 2, there is also a problem that retransmission is not performed timely enough, a delay is significantly increased, and bandwidth is reduced.

To resolve this problem, an embodiment of this application proposes a packet retransmission method. The method is applied to RDMA. When determining that there is a packet that fails to be sent, a transmit end may selectively retransmit a packet, in other words, retransmit only a packet that fails to be sent. In addition, when determining that there is a packet that fails to be sent, the transmit end may immediately retransmit the packet that fails to be sent. If the retransmitted packet fails to be retransmitted again, there is no need to wait for expiration of a timeout period to perform retransmission again. When the retransmitted packet fails to be retransmitted again, the transmit end may immediately retransmit the packet again, to shorten a retransmission delay.

During determining of whether a retransmitted packet is successfully retransmitted, the following manners may be used for performing determining.
(1) During retransmission of a plurality of packets that fail to be sent, if the last packet that fails to be sent is being retransmitted, the transmit end may record a PSN of the first new to-be-sent packet. When the transmit end receives an SACK packet and a packet sequence number of a packet carried in the SACK packet is greater than or equal to the PSN of the first new packet, if the transmit end still has not received a second ACK packet corresponding to a first packet in the plurality of packets that fail to be sent, the transmit end determines that the first packet fails to be retransmitted, and the transmit end may retransmit the first packet to a receive end again. In other words, the transmit end may not only choose to retransmit, to the receive end, only a packet that fails to be sent, but also may immediately retransmit the packet to the receive end again when finding, by comparing the PSN in the SACK packet with the recorded PSN of the new to-be-sent packet, that retransmission fails, without waiting for expiration of a timeout period to perform retransmission again. In this way, the packet is retransmitted in a timely manner, and a delay is shortened.
(2) During retransmission of a plurality of packets that fail to be sent, a PSN of the first new packet to be sent by the transmit end after the transmit end retransmits each packet is recorded. This may be understood as that a correspondence between each packet that fails to be sent and a first new to-be-sent packet is established. When the transmit end receives an SACK packet and a PSN of a packet carried in the SACK packet is greater than or equal to a recorded PSN of the first new packet, if the transmit end still has not received a second ACK packet corresponding to a second packet, the transmit end retransmits the second packet again. The packets that fail to be sent include the second packet, and a PSN that is of the first new packet and that is recorded by the transmit end when the transmit end retransmits the second packet is the PSN of the first new packet. In other words, the transmit end may not only choose to retransmit, to the receive end, only a packet that fails to be sent, but also record a PSN of a next new packet to be sent during retransmission of each packet that fails to be sent. When there is a response to a packet whose recorded PSN is greater than or equal to a PSN of a new packet, but there is no response to a packet that is being retransmitted during the recording, it may be determined that the retransmitted packet fails to be retransmitted and needs to be retransmitted again. When the packet needs to be retransmitted again, the transmit end may immediately retransmit the packet to the receive end again, without waiting for expiration of a timeout period to perform retransmission again. In this way, the packet is retransmitted in time, and a delay is shortened.

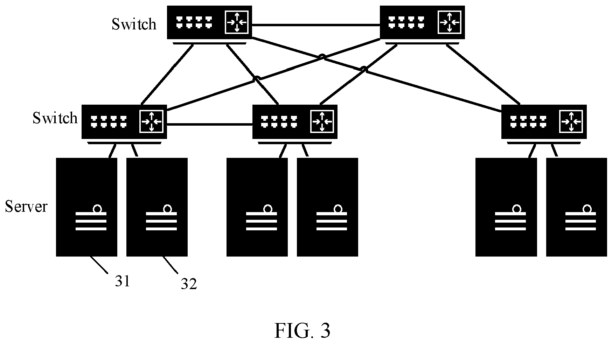

A network architecture to which the retransmission method proposed in this application may be applied may be shown in FIG. 3.

The network architecture in this application may include a plurality of servers. Data communication may be performed between the servers. For example, one server sends a packet to another server. Data communication may be performed between the servers by using a switch. As shown in FIG. 3, a server 31 sends a packet to a server 32, the server 31 serves as a data transmit end, and the server 32 serves as a data receive end. The network architecture in this application may be used in the foregoing RDMA network, or may be used in another network or a network interface card that uses the foregoing RDMA technology, for example, used in a data center of a fat-tree structure.

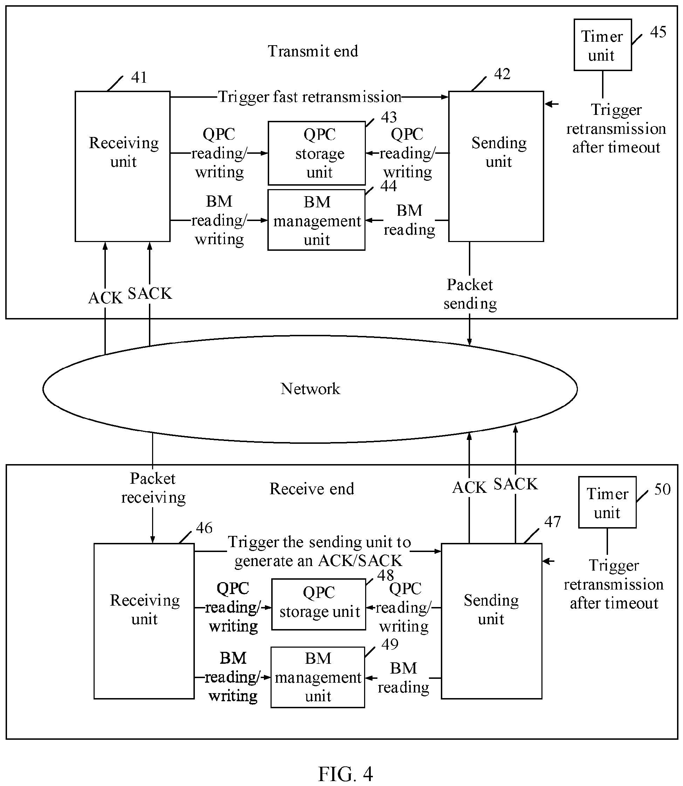

For example, this application is applied to an RDMA network interface card. The network interface card may be used in a transmit end and a receive end. The RDMA network interface card may include a receiving unit, a sending unit, a QPC storage unit, a BM management unit, a timer unit, and the like. As shown in FIG. 4, a transmit end may include a receiving unit 41, a sending unit 42, a QPC storage unit 43, a BM management unit 44, and a timer unit 45; and a receive end may include a receiving unit 46, a sending unit 47, a QPC storage unit 48, a BM management unit 49, and a timer unit 50.

The sending unit may be configured to send a data packet, a packet, data, or the like.

The receiving unit may be configured to receive a data packet, a packet, data, or the like. For example, the receiving unit may receive an ACK packet or an SACK packet.

The QPC storage unit may be configured to store context information of a link. For the transmit end, the context information may include a sequence number of a packet expected to be sent by the transmit end. When the transmit end has sent the packet, the sending unit of the transmit end may perform QPC reading/writing and indicate the QPC storage unit to update the sequence number of the packet expected to be sent. For the receive end, the context information may include a sequence number of a packet expected to be received by the receive end, information about an address in which the packet is to be stored, and the like. After the receive end receives the expected packet, the receiving unit of the receive end may perform QPC reading/writing and indicate the QPC storage unit to update a sequence number of a next packet expected to be received and information about an address in which the packet is to be stored. In different links used in the foregoing network architecture, a same transmit end may correspond to different receive ends. For example, in one link, a transmit end is a server 1, and a receive end is a server 2; and in another link, a transmit end is the server 1, and a receive end is a server 3. When the transmit end serves as a receive end, the receive end may also serve as a transmit end.

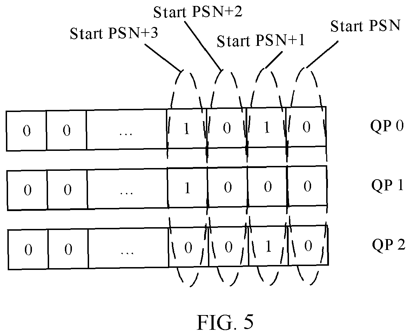

The BM management unit may be understood as a bitmap management unit, and may store bitmaps of QPs corresponding to a plurality of links. For example, as shown in FIG. 5, bit values in a bitmap corresponding to a QP 0 are 0101...00, bit values in a bitmap corresponding to a QP 1 are 00001...00, and bit values in a bitmap corresponding to a QP 2 are 0100...00. Using the QP 0 as an example, the bitmap corresponding to the QP 0 indicates that a bit value corresponding to a packet corresponding to a start PSN is 0, indicating that the packet corresponding to the start PSN is not received; a bit value corresponding to a packet corresponding to the start PSN+1 is 1, indicating that the packet corresponding to the start PSN+1 is received; a bit value corresponding to a packet corresponding to the start PSN+2 is 0, indicating that the packet corresponding to the start PSN+2 is not received; and a bit value corresponding to a packet corresponding to the start PSN+3 is 0, indicating that the packet corresponding to the start PSN+3 is not received.

For the transmit end and the receive end, the receiving unit may be configured to perform a BM read/write operation on the BM management unit based on whether a packet is successfully received, to update a bitmap in the BM management unit (a corresponding bit value may be 1 when the packet is successfully received, and a corresponding bit value may be 0 when the packet fails to be received). The sending unit may be configured to perform a BM read operation on the BM management unit, to read a bitmap in the BM management unit to learn which packets are successfully received and which packets fail to be sent. When a packet is successfully received, the sending unit may send an ACK packet; and when a packet fails to be received, the sending unit may send an SACK packet. Alternatively, when receiving a repeated packet, the receiving unit learns, by performing a BM read operation, that a bit value that is in the bitmap and that is corresponding to the packet is already 1, and may discard the received repeated packet.

The timer unit may be configured to set a timeout time. If an acknowledgment packet is still not obtained after a packet is sent and a timeout period expires, the timer unit generates a signal for triggering retransmission after timeout, to trigger the sending unit to send the packet again.

According to the foregoing network architecture, a procedure of the packet retransmission method proposed in this application may be described in Embodiment 1 and Embodiment 2, but is not limited to the two embodiments.

### Embodiment 1

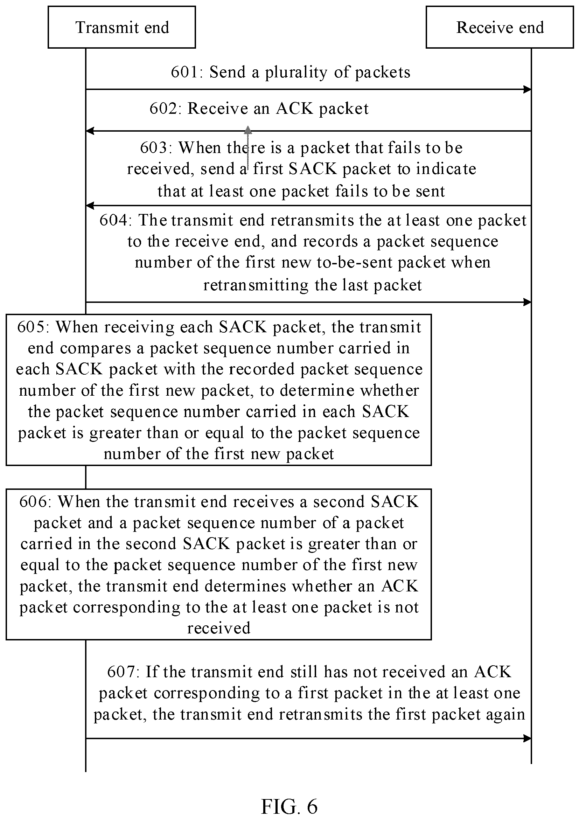

This embodiment of this application provides a packet retransmission method. The method may be applied to RDMA. As shown in FIG. 6, the method includes the following steps.

601: A transmit end sends a plurality of packets to a receive end.

When a sending unit 42 of the transmit end receives DoorBell sent by software of the transmit end, it means that the sending unit 42 of the transmit end is to periodically send a packet to the receive end. When the sending unit 42 of the transmit end needs to send a packet to the transmit end, the sending unit 42 first reads a PSN of the first to-be-sent packet from a QPC storage unit 43 of the transmit end. For example, the PSN is 0, in other words, the transmit end sends a packet to the receive end starting from a packet whose PSN is 0. Certainly, the PSN of the first to-be-sent packet is not necessarily 0, and may alternatively be an initial value negotiated by the transmit end and the receive end.

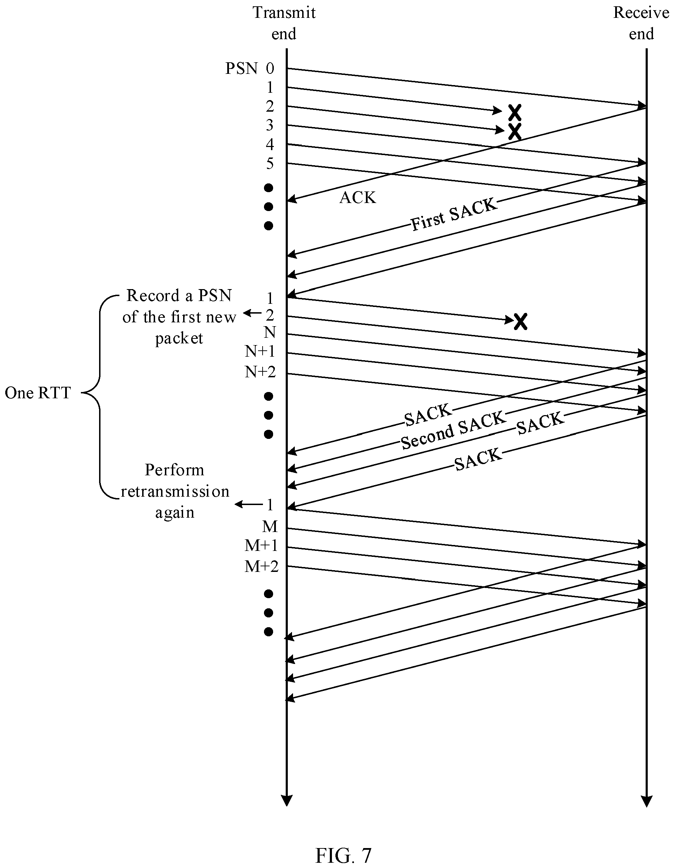

For example, as shown in FIG. 7, the transmit end sequentially sends, to the receive end, packets whose PSNs are 0, 1, 2, 3, 4, 5, and so on. Each time the sending unit 42 of the transmit end sends a packet to the receive end, the sending unit 42 first reads a PSN of a to-be-sent packet from the QPC storage unit 43, and adds the PSN to the packet. Each time after the sending unit 42 sends a packet, the sending unit 42 indicates the QPC storage unit 43 to update a PSN of a packet expected to be sent. For example, the sending unit 42 learns, by reading from the QPC storage unit 43, that the PSN expected to be sent is 0. After sending the packet whose PSN is 0, the sending unit 42 indicates the QPC storage unit 43 to update the PSN of the packet expected to be sent, and the QPC storage unit 43 updates the PSN of the packet expected to be sent to 1, and so on.

602: The receive end receives the plurality of packets sent by the transmit end, and when receiving a packet sent by the transmit end, returns an ACK packet to the transmit end. Correspondingly, the transmit end receives the ACK packet.

Each time a receiving unit 46 of the receive end receives a packet, the receiving unit 46 triggers a sending unit 47 to send an acknowledgment packet, for example, an ACK packet, to the transmit end, to notify the transmit end that the packet has been received.

The receive end expects to receive packets in a PSN sequence. A QPC storage unit 48 of the receive end may store a PSN of a packet expected to be received by the receive end. Each time the receiving unit 46 of the receive end receives an expected packet, the QPC storage unit 48 updates a PSN of a packet expected to be received next time. If a PSN of a packet received by the receiving unit 46 is equal to a PSN of a packet expected to be received by the QPC storage unit 48, the sending unit 47 sends an ACK packet to the transmit end. In addition, for each QC, each time the receive end correctly receives a packet, the receive end sets a bit value corresponding to the packet to 1 in a bitmap.

For example, as shown in FIG. 7, after receiving the packet whose PSN is 0, the receiving unit 46 indicates the QPC storage unit 48 to update the PSN of the packet expected to be received to 1; after receiving the packet whose PSN is 3, the receiving unit indicates the QPC storage unit 48 to update the PSN of the packet expected to be received to 4; and so on.

603: When determining that there is a packet that fails to be received, the receive end sends a first SACK packet to the transmit end, where the first SACK packet indicates that at least one of the packets sent by the transmit end to the receive end fails to be sent; and correspondingly, the transmit end receives the first SACK packet from the receive end.

In some embodiments, if a PSN carried in a packet received by the receive end is greater than a PSN that is stored in the QPC storage unit 48 and that is of a packet expected to be received, the receive end may determine that the expected packet corresponding to the PSN fails to be received. A BM management unit 49 may set, to 1, a value that is in a bitmap and that is corresponding to a packet received this time, and set, to 0, a value that is in the bitmap and that is corresponding to a packet that is expected to be received but is not received. In addition, the sending unit 47 sends a first SACK packet to the receive end for the packet correctly received this time. The first SACK packet may carry the bitmap, the bitmap includes bit values of a plurality of bits, and the bit values of the plurality of bits indicate whether a plurality of packets in a current QC are correctly received. The plurality of bits include at least one bit, and the at least one bit indicates that at least one of the packets sent by the transmit end to the receive end fails to be sent.

For example, as shown in FIG. 7, in the plurality of packets whose PSNs are 0, 1, 2, 3, 4, 5, and so on and that are sent by the transmit end to the receive end, the packets whose PSNs are 0, 3, 4, and 5 are successfully sent, in other words, the receive end successfully receives the packets whose PSNs are 0, 3, 4, and 5; and the packets whose PSNs are 1 and 2 fail to be sent, in other words, the receive end fails to receive the packets whose PSNs are 1 and 2. After the receiving unit 46 of the receive end is configured to receive the packet whose PSN is 0, the receiving unit 46 sets, to 1, a bit value that is in a bitmap and that is corresponding to the packet whose PSN is 0. The QPC storage unit 48 is configured to set, to 1, a PSN of a next packet expected to be received. However, when a PSN of a next packet received by the receiving unit 46 is 3, the PSN being 3 is inconsistent with the PSN being 1 of the packet expected to be received. In this case, the receive end may determine that the packets whose PSNs are 1 and 2 fail to be received. The BM management unit 49 may set, to 1, a bit value that is in the bitmap and that is corresponding to the packet whose PSN is 3 and set, to 0, bit values corresponding to the packets whose PSNs are 1 and 2. When sending, to the transmit end, an acknowledgment packet corresponding to the packet whose PSN is 3, the sending unit 48 determines that the to-be-sent acknowledgment packet is a first SACK packet, reads, from the BM management unit 49, bit values corresponding to the packets whose PSNs are 1, 2, and 3, adds the bit values to the first SACK packet, and adds the PSN of the packet whose PSN is 3 to the first SACK packet. For the transmit end, after a receiving unit 41 receives the first SACK, the transmit end may read the bit values 001 and the PSN in the first SACK, where the PSN is 3; and determine that a packet before the packet whose PSN is 3 is lost. Because a BM management unit 44 of the transmit end has recorded that a bit value corresponding to the packet whose PSN is 0 is 1, the transmit end may determine that the packets whose PSNs are 1 and 2 fail to be sent, and the BM management unit 44 records the bit values corresponding to the packets whose PSNs are 1, 2, and 3 as 001.

604: The transmit end suspends sending a new packet to the receive end, retransmits the at least one packet to the receive end, and when retransmitting the last packet in the at least one packet, records a packet sequence number of the first new packet to be sent by the transmit end.

The last packet in the at least one packet may be understood as a packet that is in the at least one packet and that is corresponding to a largest PSN. When receiving the first SACK packet, the transmit end may read a PSN and a bitmap in the first SACK packet, and may determine, based on the PSN and the bitmap in the first SACK packet, which packets fail to be sent and need to be retransmitted.

For example, as shown in FIG. 7, when the receiving unit 41 receives the first SACK packet, the transmit end may read a PSN and a bitmap in the first SACK packet, and store the bitmap in the BM management unit 44. If the PSN is 3, it indicates that the packet whose PSN is 3 is successfully sent. When the bitmap is 001, it can be learned that the packets whose PSNs are 1 and 2 fail to be sent. Therefore, the transmit end determines that the transmit end needs to retransmit the packets whose PSNs are 1 and 2 to the receive end. Therefore, when receiving the first SACK, the transmit end suspends sending a new packet to the receive end, and retransmits the packets whose PSNs are 1 and 2 to the receive end. It should be noted that, the new packet in this application may be understood as the first new packet to be sent by the transmit end after the transmit end has sent a retransmitted packet.

When the transmit end retransmits the last packet, that is, the packet whose PSN is 2, to the receive end, a PSN of the first new packet to be sent by the transmit end, that is, a current largest sending PSN, may be recorded in the QPC storage unit 43. In an example in FIG. 7, after retransmitting the packet whose PSN is 2, the transmit end records that the PSN of the first new to-be-sent packet is N. Then, after being configured to retransmit the packet whose PSN is 2, the sending unit 42 may be configured to continue to send a new packet to the receive end, for example, continue to send new packets whose PSNs are N, N+1, and N+2. In FIG. 7, N is an integer greater than or equal to 6.

605: When receiving each SACK packet, the transmit end compares a packet sequence number carried in each SACK packet with the recorded packet sequence number of the first new packet, to determine whether the packet sequence number carried in each SACK packet is greater than or equal to the packet sequence number of the first new packet.

For example, as shown in FIG. 7, when the sending unit 42 is configured to start to retransmit the at least one packet to the receive end, each time the receiving unit 41 is configured to receive an SACK packet, the transmit end reads a PSN in the SACK packet, and compares the read PSN with a recorded PSN of the first new packet, to determine whether the PSN carried in the received ACK packet is greater than or equal to the PSN of the first new packet. For example, when the receiving unit 41 receives an ACK corresponding to the packet whose PSN is 2, 2 is compared with recorded N to determine that 2 is less than N.

606: When the transmit end receives a second SACK packet and a packet sequence number of a packet carried in the second SACK packet is greater than or equal to the packet sequence number of the first new packet, the transmit end determines whether an ACK packet corresponding to the at least one packet is not received.

Because the recorded first new packet is sent after a retransmitted packet, if the transmit end has received an SACK corresponding to the recorded first new packet, but still has not received an ACK corresponding to the retransmitted packet, it indicates that the retransmitted packet fails to be retransmitted.

For example, as shown in FIG. 7, after the sending unit 42 is configured to retransmit the packets whose PSNs are 1 and 2, the packet whose PSN is 1 fails to be retransmitted for the first time, but the packet whose PSN is 2 is successfully retransmitted for the first time. The receive end returns a third SACK packet to the transmit end for the packet whose PSN is 2. The third SACK packet carries the PSN being 2, and indicates that the packet whose PSN is 2 is successfully retransmitted, but the packet whose PSN is 1 fails to be retransmitted. In this case, the PSN carried in the third SACK is 2 and is less than recorded N. Because a next packet to be sent after the packet whose PSN is 2 is retransmitted is a new packet whose PSN is N, the receive end further continues to send a second SACK packet to transmit end for the packet whose PSN is N. The second SACK packet carries the PSN being N, and indicates that the retransmitted packet whose PSN is 1 fails to be retransmitted and the packet whose PSN is 2 is successfully retransmitted. In this case, the PSN carried in the second SACK is N and is equal to recorded N. When the receiving unit 41 receives the second SACK packet carrying the PSN being N, the transmit end determines, based on the second SACK packet, whether ACK packets corresponding to the packets whose PSNs are 1 and 2 are not received, to determine whether both the packets whose PSNs are 1 and 2 are successfully retransmitted.

607: If the transmit end determines that the transmit end still has not received an ACK packet corresponding to a first packet in the at least one packet, the transmit end retransmits the first packet to the receive end again.

For example, as shown in FIG. 7, assuming that the first packet is the packet whose PSN is 1, if the transmit end finds that the receiving unit 41 still has not received the ACK corresponding to the packet whose PSN is 1, the transmit end determines that the packet whose PSN is 1 fails to be retransmitted and needs to be retransmitted again. In this case, the transmit end suspends sending a new packet to the receive end, and the transmit end retransmits the packet whose PSN is 1 again, without waiting for expiration of a timeout period to perform retransmission again, as in a conventional technology, but may immediately retransmit the packet again. As shown in FIG. 7, the sending unit 41 immediately retransmits the packet whose PSN is 1 again, and then continues to send new packets to the receive end. The new packets may be new packets whose PSNs are M, M+1, and M+2 in FIG. 7. M is an integer greater than N+2.

Therefore, in this application, the transmit end not only can accurately learn, by using a bitmap carried in an SACK, a packet that is successfully sent and a packet that fails to be sent, but also can retransmit only the packet that fails to be sent. In this way, retransmission efficiency can be improved, and retransmission bandwidth occupation can be reduced. In addition, the transmit end can record a PSN of a next new packet when retransmitting the last packet, and compare a PSN carried in the received SACK with the recorded PSN, to determine whether there is a packet that fails to be retransmitted, that is, whether there is a "discarded retransmitted packet". If it is determined that there is a packet that fails to be retransmitted, retransmission may be immediately performed again. Usually, duration from a time when the transmit end starts to retransmit a packet for the first time to a time when the transmit end starts to retransmit a packet next time is usually far less than one timeout period. Packet retransmission can be started again if the duration is in one RTT period, in other words, "a discarded retransmitted packet" can be retransmitted if the duration is in one RTT period. One RTT period is far less than one timeout period, so that "the discarded retransmitted packet" can be retransmitted in time, thereby shortening a retransmission delay.

### Embodiment 2

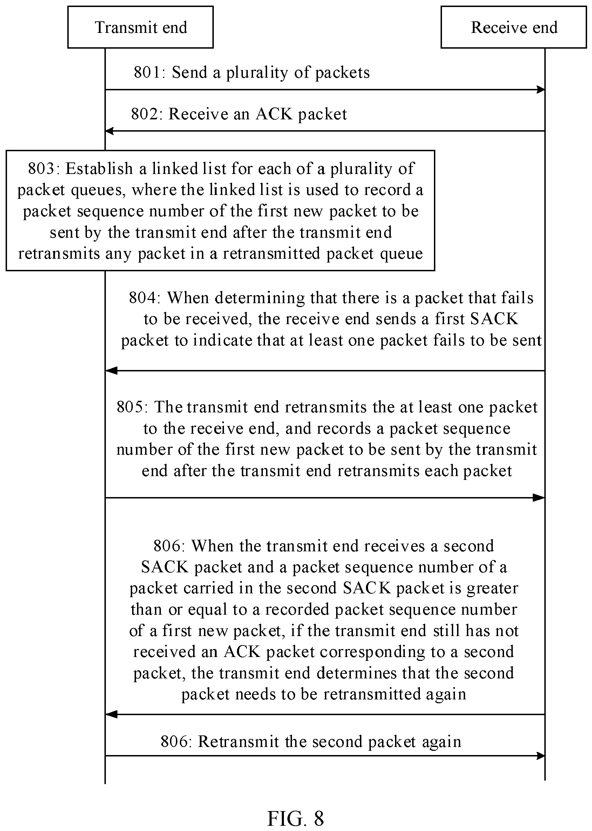

This embodiment of this application provides a packet retransmission method. The method may be applied to RDMA. As shown in FIG. 8, the method includes the following steps.

801: A transmit end sends a plurality of packets to a receive end.

For an implementation of step 801, refer to step 601.

802: The receive end receives the plurality of packets sent by the transmit end, and when receiving a packet sent by the transmit end, returns an ACK packet to the transmit end. Correspondingly, the transmit end receives the ACK packet.

For an implementation of step 802, refer to step 602.

803: The transmit end establishes a linked list for each of a plurality of packet queues, where the linked list is used to record a packet sequence number of the first new packet to be sent by the transmit end after the transmit end retransmits any packet in the retransmitted packet queue.

Each packet queue (that is, a QP) includes a plurality of packets, and each packet queue corresponds to one connection. The linked list may be stored in a QPC storage unit 43.

It may also be understood that the linked list is used to establish a correspondence between a retransmitted packet and the first to-be-sent new packet. This is based on the following case: A new packet is sent after a retransmitted packet in a subsequent packet sending process; and if the transmit end has received an acknowledgment packet corresponding to the recorded first to-be-sent new packet, but still has not received an acknowledgment packet corresponding to a corresponding retransmitted packet, it indicates that the retransmitted packet fails to be retransmitted.

804: When determining that there is a packet that fails to be received, the receive end sends a first SACK packet to the transmit end, where the first SACK packet indicates that at least one of the packets sent by the transmit end to the receive end fails to be sent; and correspondingly, the transmit end receives the first SACK packet from the receive end.

An implementation of step 804 is similar to the implementation of step 603.

805: The transmit end suspends sending a new packet to the receive end, retransmits the at least one packet to the receive end, and when retransmitting each of the at least one packet, records a packet sequence number of the first new packet to be sent by the transmit end after the transmit end retransmits each packet.

If a receiving unit 41 receives the first SACK packet, the transmit end determines that a packet that fails to be sent exists in the previously sent packets. Therefore, the transmit end controls a sending unit 42 to suspend sending a new packet to the receive end and needs to start to retransmit the packet that fails to be sent. When retransmitting each packet, the transmit end needs to record, in a QPC storage unit 43, a PSN of the first new packet to be sent after each retransmitted packet is sent. If a plurality of retransmitted packets continuously fail to be sent, for the plurality of retransmitted packets, correspondingly recorded PSNs of the first new packets are the same. If the plurality of retransmitted packets discontinuously fail to be sent, for the plurality of retransmitted packets, correspondingly recorded PSNs of the first new packets are different. A reason for this case is as follows: After receiving an ACK packet corresponding to a packet retransmitted previously, the transmit end may still have not received an acknowledgment packet indicating that a packet retransmitted later is successfully retransmitted. In this case, the transmit end needs to first send a new packet. After receiving the ACK packet corresponding to the packet retransmitted later, the transmit end continues to send a new packet. The new packets that need to be sent twice are different.

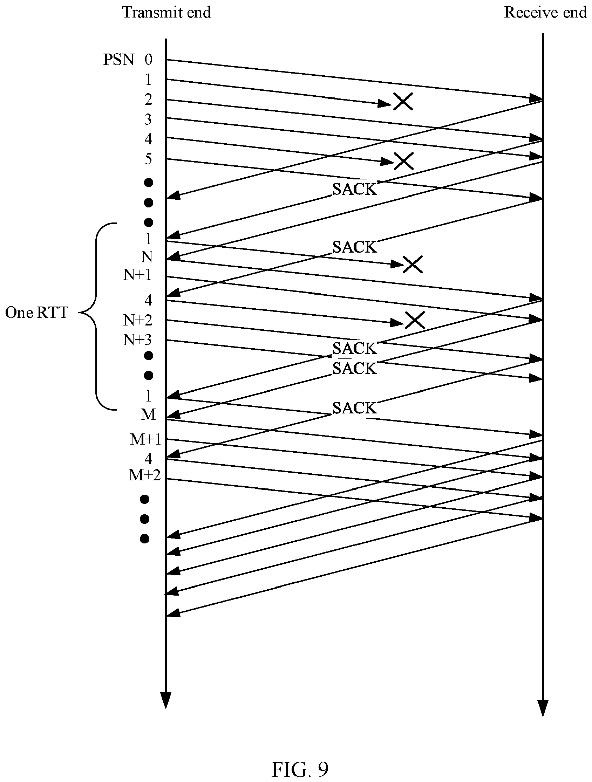

For example, as shown in FIG. 9, it is assumed that a plurality of packets that are sent by the transmit end and that use a packet whose PSN is 0 as a start packet belong to a same QP. When receiving an SACK packet carrying a PSN being 2 (a packet whose PSN is 2 is successfully sent), the receiving unit 41 determines, based on a bitmap in the SACK packet, that a packet whose PSN is 1 fails to be sent and the packets whose PSNs are 0 and 2 are successfully sent. Therefore, the sending unit 42 suspends sending a new packet and retransmits the packet whose PSN is 1. When retransmitting the packet whose PSN is 1, the transmit end records, in a linked list in the QPC storage unit 43, that a PSN of the first new packet to be sent after the packet whose PSN is 1 is retransmitted is N. Then, the receiving unit 41 receives an SACK packet carrying a PSN being 3 (the SACK packet indicates that packets whose PSNs are 0 and 3 are successfully sent, but the packet whose PSN is 1 fails to be sent). As shown in FIG. 9, the transmit end further sends a packet whose PSN is 5 after a packet whose PSN is 4. Because the packet whose PSN is 4 also fails to be sent for the first time, when the receiving unit 41 receives an SACK carrying the PSN being 5, a bitmap in the SACK indicates that the packet whose PSN is 4 also fails to be sent. Therefore, the sending unit 42 suspends sending a new packet and retransmits the packet whose PSN is 4. When retransmitting the packet whose PSN is 4, the transmit end records, in the linked list in the QPC storage unit 43, that a PSN of the first new packet to be sent after the packet whose PSN is 4 is retransmitted is N+2. Then, the sending unit 42 continues to send a new packet whose PSN is N+3 or another packet sequence number.

In other words, each time a packet is retransmitted, a PSN of the first new packet to be sent by the transmit end after the transmit end retransmits each packet needs to be recorded in a linked list. In other words, a correspondence between a retransmitted packet and a new to-be-sent packet is established.

It is assumed that there is the following case in the foregoing packet retransmission process:

The at least one packet includes a second packet. When retransmitting the second packet, the transmit end determines a first linked list corresponding to a packet queue in which the second packet is located, and records, in the first linked list, a packet sequence number of the first new packet to be sent by the transmit end after the transmit end retransmits the second packet, where the packet sequence number is a packet sequence number of a first new packet. The second packet may be, for example, the foregoing retransmitted packets whose PSNs are 1 and 4.

In this case, the method may further include the following step:

806. When the transmit end receives a second SACK packet and a packet sequence number of a packet carried in the second SACK packet is greater than or equal to the recorded packet sequence number of the first new packet, if the transmit end still has not received an ACK packet corresponding to the second packet, the transmit end retransmits the second packet again.

After the transmit end starts to retransmit the first packet in the at least one packet, each time the transmit end receives an SACK packet corresponding to a packet, the transmit end reads a PSN in the SACK packet, and compares the PSN with a PSN recorded in a linked list; and if the transmit end finds that a PSN carried in a second SACK is greater than or equal to a PSN of a packet in the linked list, the transmit end checks whether a second packet that is retransmitted when the PSN of the packet is recorded in the linked list is received, that is, whether a retransmitted packet corresponding to the packet recorded in the linked list is received.

For example, the retransmitted second packet may be understood as a retransmitted packet whose PSN is 1 or 4 in FIG. 9. According to the description in step 805, when the receiving unit 41 has received an SACK packet corresponding to the packet whose PSN is N, but still has not received an ACK packet corresponding to the retransmitted packet whose PSN is 1, the transmit end determines that the packet whose PSN is 1 fails to be retransmitted and the packet whose PSN is 1 needs to be retransmitted again. When the receiving unit 41 has received an SACK packet corresponding to the packet whose PSN is N+2, but still has not received an ACK packet corresponding to the retransmitted packet whose PSN is 4, the transmit end determines that the packet whose PSN is 4 fails to be retransmitted and the packet whose PSN is 4 needs to be retransmitted again. As can be seen from FIG. 9, when the sending unit 42 retransmits the packet whose PSN is 1 for the second time, a PSN of the first new to-be-sent packet may be recorded as M in the linked list; and when the sending unit 42 retransmits the packet whose PSN is 4 for the second time, a PSN of the first new to-be-sent packet may be recorded as M+2 in the linked list, to determine whether the packets whose PSNs are 1 and 4 and that are retransmitted for the second time are successfully retransmitted.

Therefore, in this application, for a packet that fails to be sent, each time the transmit end retransmits a packet that fails to be sent, the transmit end records a PSN of a next to-be-sent new packet. When the transmit end has received an SACK packet corresponding to the recorded next new packet, but still has not received an ACK packet corresponding to the corresponding retransmitted packet, the transmit end determines that the retransmitted packet fails to be retransmitted, and the transmit end may immediately retransmit the packet again without waiting for expiration of a timeout period to perform retransmission again. In this way, the packet can be retransmitted in time. In addition, a time period from a time when first-time packet retransmission is performed to a time when packet retransmission is performed again may be one RTT period, and one RTT period is far less than one timeout period. In this case, a plurality of packets that fail to be retransmitted can be accurately retransmitted again in one RTT period, thereby shortening a retransmission delay.

It may be understood that, to implement the foregoing functions, the communication apparatus (for example, the communication apparatus may be a transmit end) includes corresponding hardware and/or software modules for performing the functions. Algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the communication apparatus may be divided into function modules based on the foregoing method examples. For example, the function modules may be obtained through division based on corresponding functions, or two or more functions may be integrated into one processing module. The integrated module may be implemented in a form of hardware. It should be noted that, in embodiments, division into the modules is an example, and is merely logical function division. During actual implementation, another division manner may be used.

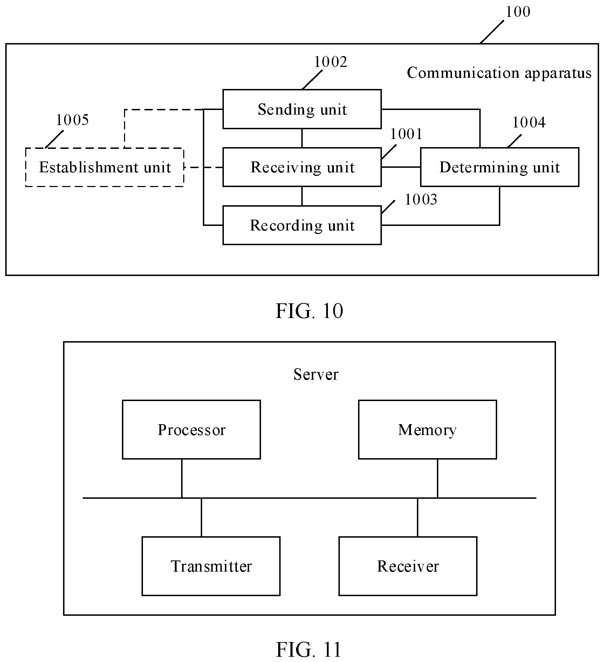

When the function modules are obtained through division based on the corresponding functions, FIG. 10 is a possible schematic composition diagram of a communication apparatus 100. The communication apparatus may be the transmit end in the foregoing embodiments. As shown in FIG. 10, the transmit end may include a receiving unit 1001, a sending unit 1002, a recording unit 1003, and a determining unit 1004.

The receiving unit 1001 may be configured to support the transmit end in performing step 602, step 603, step 802, step 806, and the like, and/or used in another process of the technology described in this specification.

The sending unit 1002 may be configured to support the transmit end in performing step 601, step 604, step 607, step 801, step 804, step 805, step 806, and the like, and/or used in another process of the technology described in this specification.

The recording unit 1003 may be configured to support the transmit end in performing step 604, step 805, and the like, and/or used in another process of the technology described in this specification.

The determining unit 1004 may be configured to support the transmit end in performing step 605, step 606, step 607, and the like, and/or used in another process of the technology described in this specification.

The communication apparatus may further include an establishment unit 1005, configured to support the transmit end in performing step 803 and the like, and/or used in another process of the technology described in this specification.

The sending unit 1002 in FIG. 10 is similar to the sending unit 41 of the transmit end in FIG. 4. The receiving unit 1001 in FIG. 10 is similar to the receiving unit 41 in FIG. 4. An area recorded by the recording unit 1003 in FIG. 10 may include the QPC storage unit 43, the BM management unit 44, and the like in FIG. 4.

It should be noted that all related content of the steps in the foregoing method embodiments may be cited in function description of corresponding function modules. Details are not described herein again.

The communication apparatus 100 provided in this embodiment is configured to perform the foregoing packet retransmission method, and therefore can achieve same effect as the foregoing implementation method.

When an integrated unit is used, the communication apparatus 100 may include a processing module, a storage module, and a communication module. The processing module may be configured to control and manage an action of the communication apparatus 100. For example, the processing module may be configured to support the communication apparatus 100 in performing the steps performed by the determining unit 1101 and the recording unit 1003. The storage module may be configured to support the communication apparatus 100 in storing program code, data, and the like, for example, recording a bitmap and a PSN. The communication module may be configured to support communication between the communication apparatus 100 and another device, for example, communication between the communication apparatus 100 and a receive end.

The processing module may be a processor or a controller. The processing module may implement or execute various example logical blocks, modules, and circuits described with reference to content disclosed in this application. The processor may alternatively be a combination for implementing a computing function, for example, a combination including one or more microprocessors or a combination of a digital signal processor (digital signal processing, DSP) and a microprocessor. The storage module may be a memory. The communication module may specifically be a device, for example, a radio frequency circuit, a Bluetooth chip, or a Wi-Fi chip, that interacts with another electronic device.

In an embodiment, when the processing module is a processor, the storage module is a memory, and the communication module includes a transmitter and a receiver, the communication apparatus in this embodiment may be a server having a structure shown in FIG. 11.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the packet retransmission method in the foregoing embodiments.

An embodiment of this application further provides a computer storage medium. The computer storage medium stores computer instructions. When the computer instructions are run on an electronic device, the electronic device is enabled to perform the foregoing related method steps, to implement the packet retransmission method in the foregoing embodiments.

An embodiment of this application further provides a computer program product. When the computer program product runs on a computer, the computer is enabled to perform the foregoing related steps, to implement the packet retransmission method performed by the electronic device in the foregoing embodiments.

In addition, an embodiment of this application further provides an apparatus. The apparatus may specifically be a chip, a component, or a module. The apparatus may include a processor and a memory that are connected to each other. The memory is configured to store computer-executable instructions. When the apparatus runs, the processor may execute the computer-executable instructions stored in the memory, so that the chip performs the packet retransmission method performed by the electronic device in the foregoing method embodiments.

The electronic device, the computer storage medium, the computer program product, and the chip provided in the embodiments are configured to perform the corresponding method provided above. Therefore, for beneficial effect that can be achieved by the electronic device, the computer storage medium, the computer program product, and the chip, refer to the beneficial effect of the corresponding method provided above. Details are not described herein again.

Another embodiment of this application provides a system. The system may include the foregoing transmit end and the foregoing receive end, and may be configured to implement the foregoing packet retransmission method.

Based on the foregoing descriptions of the implementations, a person skilled in the art may understand that for convenient and brief description, division into the foregoing function modules is merely used as an example for description. During actual application, the foregoing functions can be allocated to different function modules for implementation based on a requirement, in other words, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the prior art, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A packet retransmission method, wherein the method is applied to a remote direct memory access RDMA network, and the method comprises:
receiving, by a transmit end, a first selective acknowledgment SACK packet from a receive end, wherein the first SACK packet indicates that at least one of packets sent by the transmit end to the receive end fails to be sent;
retransmitting, by the transmit end, the at least one packet to the receive end, and when retransmitting the last packet in the at least one packet, recording a packet sequence number of the first new packet to be sent by the transmit end; and
retransmitting, by the transmit end, a first packet to the receive end again when the transmit end receives a second SACK packet and a packet sequence number of a packet carried in the second SACK packet is greater than or equal to the packet sequence number of the first new packet, and if the transmit end determines, based on the second SACK packet, that the transmit end still has not received the first packet in the at least one packet.

2. The method according to claim 1, wherein the first SACK packet carries a bitmap, the bitmap comprises at least one bit, and some bits of the at least one bit indicate that the at least one of the packets sent by the transmit end to the receive end fails to be sent.

3. The method according to claim 1 or 2, wherein the retransmitting, by the transmit end, a first packet to the receive end again when the transmit end receives a second SACK packet and a packet sequence number of a packet carried in the second SACK packet is greater than or equal to the packet sequence number of the first new packet, and if the transmit end determines, based on the second SACK packet, that the transmit end still has not received the first packet in the at least one packet comprises:
when receiving each SACK packet, comparing, by the transmit end, a packet sequence number carried in each SACK packet with the recorded packet sequence number of the first new packet, to determine whether the packet sequence number carried in each SACK packet is greater than or equal to the packet sequence number of the first new packet;
when the transmit end receives the second SACK packet and the packet sequence number of the packet carried in the second SACK packet is greater than or equal to the packet sequence number of the first new packet, determining, by the transmit end, whether an ACK packet corresponding to the at least one packet is not received for the retransmitted at least one packet; and
if the transmit end still has not received an ACK packet corresponding to the first packet in the at least one packet, retransmitting, by the transmit end, the first packet to the receive end again.

4. The method according to any one of claims 1 to 3, wherein a time period from a time when the transmit end starts to retransmit the at least one packet to a time when the transmit end retransmits the first packet again is less than one timeout period.

5. A packet retransmission method, wherein the method is applied to a remote direct memory access RDMA network, and the method comprises:
receiving, by a transmit end, a first selective acknowledgment SACK packet from a receive end, wherein the first SACK packet indicates that at least one of packets sent by the transmit end to the receive end fails to be sent;
retransmitting, by the transmit end, the at least one packet to the receive end, and recording, when retransmitting each of the at least one packet, a packet sequence number of the first new packet to be sent by the transmit end after the transmit end retransmits each packet, wherein the at least one packet comprises a second packet, and a packet sequence number that is of the first new to-be-sent packet and that is recorded by the transmit end when the transmit end retransmits the second packet is a packet sequence number of a first new packet; and
when the transmit end receives a second SACK packet and a packet sequence number of a packet carried in the second SACK packet is greater than or equal to the recorded packet sequence number of the first new packet, if the transmit end still has not received an ACK packet corresponding to the second packet, retransmitting, by the transmit end, the second packet again.

6. The method according to claim 5, wherein the first SACK packet carries a bitmap, the bitmap comprises at least one bit, and some bits of the at least one bit indicate that the at least one of the packets sent by the transmit end to the receive end fails to be sent.

7. The method according to claim 5 or 6, wherein before the retransmitting, by the transmit end, the at least one packet to the receive end, the method further comprises:
establishing, by the transmit end, a linked list for each of a plurality of packet queues, wherein the linked list is used to record a packet sequence number of the first new packet to be sent by the transmit end after the transmit end retransmits any packet in the retransmitted packet queue.

8. The method according to claim 7, wherein the recording, when retransmitting each of the at least one packet, a packet sequence number of the first new packet to be sent by the transmit end after the transmit end retransmits each packet comprises:
when retransmitting the second packet, determining, by the transmit end, a first linked list corresponding to a packet queue in which the second packet is located, and recording, in the first linked list, a packet sequence number of the first new packet to be sent by the transmit end after the transmit end retransmits the second packet, wherein the packet sequence number is the packet sequence number of the first new packet.

9. The method according to any one of claims 5 to 8, wherein a time period from a time when the transmit end starts to retransmit the at least one packet to a time when the transmit end retransmits the second packet again is less than one timeout period.

10. A communication apparatus, wherein the communication apparatus serves as a transmit end, the communication apparatus is applied to a remote direct memory access RDMA network, and the communication apparatus comprises:
a receiver, configured to receive a first selective acknowledgment SACK packet from a receive end, wherein the first SACK packet indicates that at least one of packets sent by the transmit end to the receive end fails to be sent;
a transmitter, configured to retransmit the at least one packet to the receive end; a memory, configured to: when the transmit end retransmits the last packet in the at least one packet, record a packet sequence number of the first new packet to be sent by the transmit end; and
a processor, configured to: determine that the transmit end receives a second SACK packet and a packet sequence number of a packet carried in the second SACK packet is greater than or equal to the packet sequence number of the first new packet; and if the transmit end still has not received an ACK packet corresponding to a first packet in the at least one packet, indicate the transmitter to retransmit the first packet to the receive end again.

11. The communication apparatus according to claim 10, wherein the first SACK packet carries a bitmap, the bitmap comprises at least one bit, and some bits of the at least one bit indicate that the at least one of the packets sent by the transmit end to the receive end fails to be sent.

12. The communication apparatus according to claim 10 or 11, wherein the processor is configured to: when the transmit end receives each SACK packet, compare a packet sequence number carried in each SACK packet with the recorded packet sequence number of the first new packet, to determine whether the packet sequence number carried in each SACK packet is greater than or equal to the packet sequence number of the first new packet; and
when the second SACK packet is received and the packet sequence number of the packet carried in the second SACK packet is greater than or equal to the packet sequence number of the first new packet, determine whether an ACK packet corresponding to the at least one packet is not received; and
the transmitter is configured to retransmit the first packet to the receive end again if the transmit end still has not received an ACK packet corresponding to the first packet in the at least one packet.

13. The communication apparatus according to any one of claims 10 to 12, wherein a time period from a time when the transmit end starts to retransmit the at least one packet to a time when the transmit end retransmits the first packet again is less than one timeout period.

14. A communication apparatus, wherein the communication apparatus serves as a transmit end, the communication apparatus is applied to a remote direct memory access RDMA network, and the communication apparatus comprises:
a receiver, configured to receive a first selective acknowledgment SACK packet from a receive end, wherein the first SACK packet indicates that at least one of packets sent by the transmit end to the receive end fails to be sent;
a transmitter, configured to retransmit the at least one packet to the receive end; and
a memory, configured to: during retransmission of each of the at least one packet, record a packet sequence number of the first new packet to be sent by the transmit end after the transmit end retransmits each packet, wherein the at least one packet comprises a second packet, and a packet sequence number that is of the first new to-be-sent packet and that is recorded by the transmit end when the transmit end retransmits the second packet is a packet sequence number of a first new packet; wherein
the receiver is further configured to: when the receiver receives a second SACK packet and a packet sequence number of a packet carried in the second SACK packet is greater than or equal to the recorded packet sequence number of the first new packet, if the receiver still has not received an ACK packet corresponding to the second packet, indicate the transmitter to retransmit the second packet again.

15. The communication apparatus according to claim 14, wherein the first SACK packet carries a bitmap, the bitmap comprises at least one bit, and some bits of the at least one bit indicate that the at least one of the packets sent by the transmit end to the receive end fails to be sent.

16. The communication apparatus according to claim 14 or 15, further comprising a processor, configured to:
establish a linked list for each of a plurality of packet queues, wherein the linked list is stored in the memory, and the linked list is used to record a packet sequence number of the first new packet to be sent by the transmit end after the transmit end retransmits any packet in the retransmitted packet queue.

17. The communication apparatus according to claim 16, wherein the memory is configured to:
during retransmission of the second packet, determine a first linked list corresponding to a packet queue in which the second packet is located, and record, in the first linked list, a packet sequence number of the first new packet to be sent by the transmit end after the transmit end retransmits the second packet, wherein the packet sequence number is the packet sequence number of the first new packet.

18. The communication apparatus according to any one of claims 14 to 17, wherein a time period from a time when the transmit end starts to retransmit the at least one packet to a time when the transmit end retransmits the second packet again is less than one timeout period.

19. A computer-readable storage medium, comprising computer instructions, wherein when the computer instructions are run on an electronic device, the electronic device is enabled to perform the method according to any one of claims 1 to 9.

20. A computer program product, wherein when the computer program product runs on a computer, an electronic device is enabled to perform the method according to any one of claims 1 to 9.
